# NEW EUROPEAN PATENT SPECIFICATION

(11) **EP 2 329 967 B2**
(45) Date of publication and mention of the opposition decision: **01.03.2017**
(45) Mention of the grant of the patent: 17.07.2013
(21) Application number: 10193082.4
(22) Date of filing: 30.11.2010
(51) Int. Cl.: B60C 11/12, B60C 11/24

(54) **Tire tread wear indicator and molding device therefore**
Reifenlaufflächenabnutzungsindikator und Vorrichtung zum Formen eines solchen Indikators
Indicateur d'usure de chape de pneu et dispositif de moulage permettant de former un tel indicateur

(30) Priority: 02.12.2009 US 629364
(43) Date of publication of application: 08.06.2011
(73) Proprietor: The Goodyear Tire & Rubber Company, Akron, OH 44316-0001 (US)
(72) Inventor: Cuny, Andre, B-6720, Habay-la-Neuve (BE); Severens, Frank, B-6700, Frassem-Arlon (BE)
(74) Representative: Kutsch, Bernd

(56) References cited:
- EP-A1- 1 630 008
- EP-A1- 1 705 034
- EP-A1- 2 050 589
- EP-A2- 1 066 991
- "TOY ADDING MACHINE", POPULAR MECHANICS, HEARST COMMUNICATIONS INC., NEW YORK, NY, US, vol. 116, no. 5, 1 November 1961 (1961-11-01), page 80, XP001344702, ISSN: 0032-4558
- TRADE MARKS AND DESIGNS: 'Certificate of registration 000860390' 30 January 2008, ALICANTE,
- 'Soft, rolling, uncompromising grip' NOKIAN FINLAND,
- 'Doubly effective slush wedges' 01 January 2009, FINLAND, pages 01 - 24

## Description

### Field of the Invention

The present invention is directed to a wear indicator for the tread of a tire and a molding device for forming the wear indicator.

### Background of the Invention

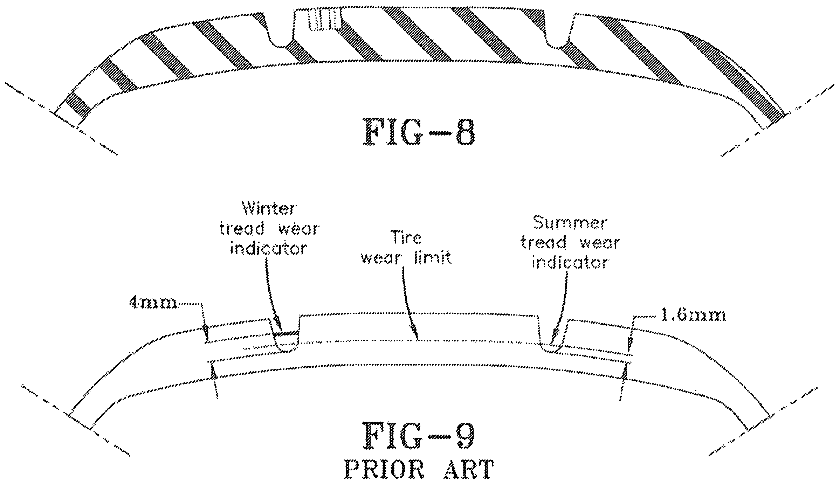

The use of treadwear indicators is not new and the use of treadwear indicators is mandated by law in many countries. A variety of such indicators are known. Once such type employs colored means, such as colored rubber or colored fibers, below the tread for a visual indicator of wear. Other types use tie-bar type elements in the tread grooves, as shown in FIG. 9. The tie bars in the tread grooves can be problematic if they interfere with the water evacuation. When required by law, the upper surface of the tread wear indicator must be located at a height of 1.6 mm from the base of the groove in which the wear indicator is located. Some countries impose additional requirements for a winter tread wear indicator which is located at a height of 4 mm from the base of a groove.

The practical problem with the colored indicators of the type mentioned above is that it is difficult for the operator to determine the level of wear until the tire is worn, since the wear indicator is the same color as the remaining part of the tread.

US-A- 6,523,586 discloses a wear indicator for a tire tread wherein, in a series, or predetermined closely located grouping, of related marks, the marks disappear as the tire is worn.

EP-A- 1 630 008 describes a tire tread in accordance with the preamble of claim 1. Similar tire treads are also known from EP-A- 1 705 034. EP-A- 2 050 589, EP-A- 1 066 991 and from the Article "Toy Adding Machine", Popular Mechanics, volume 116, number 5, November 1st, 1961, page 80.

### Summary of the Invention

The invention relates to active tread in accordance with claim 1, a tire with such a tread in accordance with claim 12, and a molding device in accordance with claim 13.

Dependent claims refer to preferred embodiments of the invention.

Disclosed is a tire tread for a vehicle tire, the tread having at least one tread element projecting from the base of the tread and having a defined tread depth. At least one of the tread elements has a tread wear indicator. The wear indicator is a hole formed in the tire having a constant cross-sectional shape for a defined tread depth d. The wear indicator is a snowflake hole that disappears after the defined depth has been worn away. The wear indicator could also include a second hole in the tread having a shape which appears after the first cross-sectional shape wears away. The second shape would have a different cross-sectional shape than said first shape, and have a constant cross-sectional shape for a defined depth. The wear indicator may further optionally include a third hole having a different cross-sectional shape than said first or second hole.

### Definitions

The following definitions are applicable to the present invention.

"Inner" means toward the inside of the tire and "outer" means toward its exterior.

"Outer" means toward the tire's exterior.

"Radial" and "radially" are used to mean directions radially toward or away from the axis of rotation of the tire.

"Tread" means a molded rubber component which, when bonded to a tire casing, includes that portion of the tire that comes into contact with the road when the tire is normally inflated and under normal load. The tread has a depth or non-skid depth conventionally measured from the tread surface to the bottom of the deepest groove of the tire.

### Brief Description of the Drawings

The invention will be described by way of example and with reference to the accompanying drawings in which:
FIG. 1 is a perspective view of a portion of a tire tread, wherein the left side of the tire is new or unworn, and the right hand side of the tire has been worn slightly more than 4 mm;
FIG. 2 illustrates a design of a tread wear indicator;
FIG. 3 is a cross sectional view of a portion of a tread molding segment and a tread wear indicator molding device;
FIG. 4 is a side view of a molding device;
FIG. 5 is a top view of a molding device of FIG. 4;
FIG. 6 is a perspective view of the molding device;
FIG. 7 is a perspective view of a second embodiment of a blade of the molding device;
FIG. 8 is a cross-sectional view of a tire tread illustrating a tread wear indicator of the present invention;
FIG. 9 is a cross-sectional view of a tire tread illustrating prior art tread indicators;
FIG. 10 is an exploded view of a second embodiment of a molding blade for a tire tread indicator;
FIG. 11 is a top view of the molding blade of FIG. 10;
FIG. 12 illustrates the two tread wear indicator shapes of the blade of FIG. 10;
FIG. 13 is a side view of a third embodiment of a molding blade installed in a portion of a tread segment;
FIG. 14 is a top view of the blade of FIG. 13 in the direction 14-14;
FIG. 15 is a top view of the blade of FIG. 13;
FIG. 16 illustrates the three possible tread wear indicator shapes for the blade of FIG. 13.
FIG. 17 illustrates the tread having the tread wear indicators of FIG. 13.

### Detailed Description of the Invention

The reference numerals as depicted in the drawings are the same as those referred to in the specification. For purposes of this application, the various embodiments illustrated in the figures each use the same reference numeral for similar components. The structures employed basically the same components with variations in location or quantity thereby giving rise to the alternative constructions in which the inventive concept can be practiced.

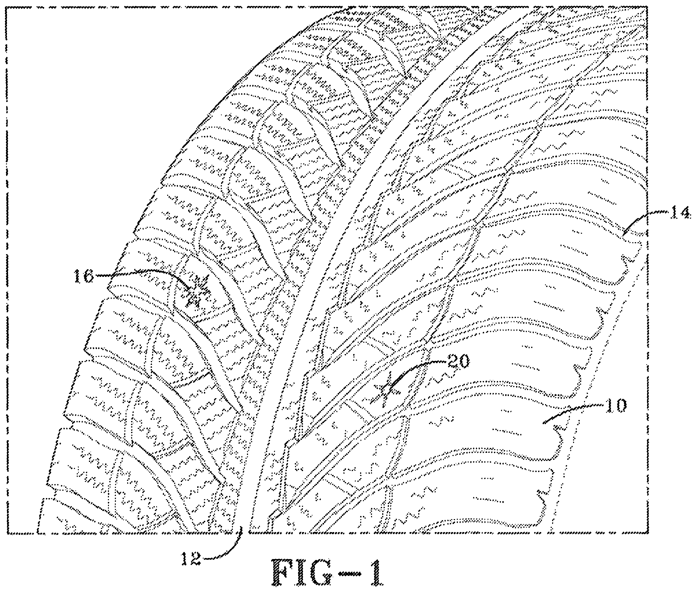

FIG. 1 illustrates a portion of a tire tread. The tread may comprise a plurality of blocks 10 defined by circumferential and lateral grooves 12, 14. The left hand side of the tire tread is shown in the unworn state, or new condition and illustrates a snowflake shaped hole or tread wear indicator 16. The right hand side of the tire is shown with slightly more than 4 mm of wear. The exact configuration of the tread is irrelevant to the present invention and any tread configuration may be employed. Located in the tread is one or more wear indicators 20. The wear indicator 20 may be located in any desired location such as a tread block, rib or anywhere else on the outer tread surface. The wear indicator is preferably not located in a groove or channel.

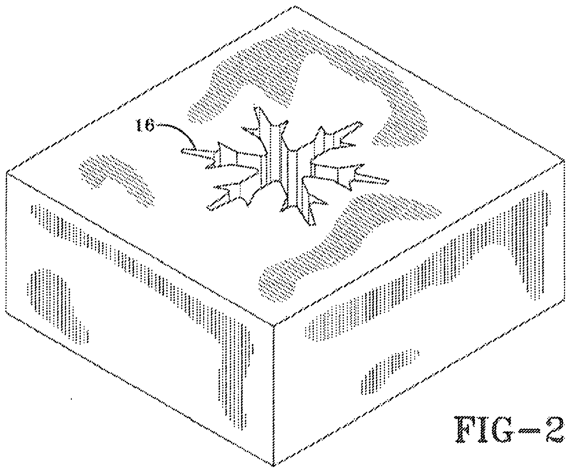

When unworn, the wear indicator 20 is represented by a hole or cutout in the tread surface having a first shape. As shown in FIG. 2, the outer perimeter of the cutout configuration is shaped like a snowflake 16. A snowflake shaped hole 16 will appear on the outer surface of the tire until a defined tread depth has been worn away. Thus for example, if the snowflake hole has a depth of 4 mm, the snowflake will disappear when the tread has eroded 4 mm. The disappearance of the first shape alerts the consumer that the tire has worn to a predetermined level. The configuration may be any type of configuration that readily communicates this to the consumer. The depth of the cutout may be selected by the tire designer to be applicable to different government standards.

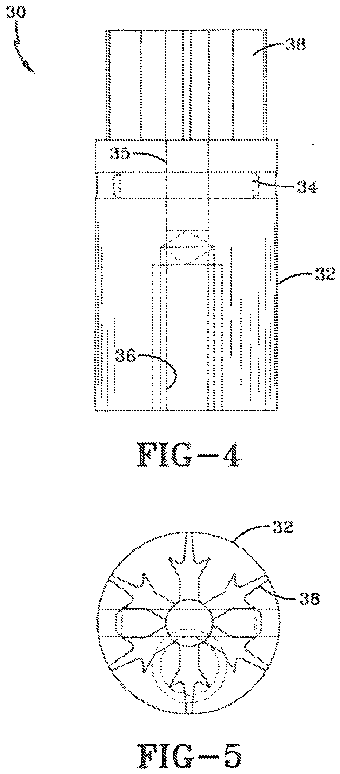

A first molding device 30 of the present invention is shown in FIGS. 4-6. The molding device has a base 32 having an internal pin 34 and an internal bore 36 for receiving a screw or other fastener to a mold segment. The base 32 further comprises a blade 38. The blade has a male portion 35 that is received in the bore of base 32 and secured to the base 32 via pin 34. The blade is shaped in this example as a snowflake. The depth of the blade is sized as desired. The molding device 30 is formed from conventional mold materials, such as steel, aluminum, or pressed metal.

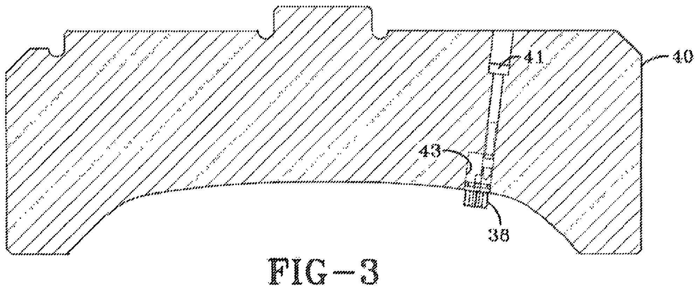

FIG. 3 illustrates the molding device 32 inserted in a segment 40. It is important to note that the full depth of the blade 38 extends into the mold. The molding device 32 is secured in a hole 43 of the tread segment via a fastener 41 which is secured to bore 36.

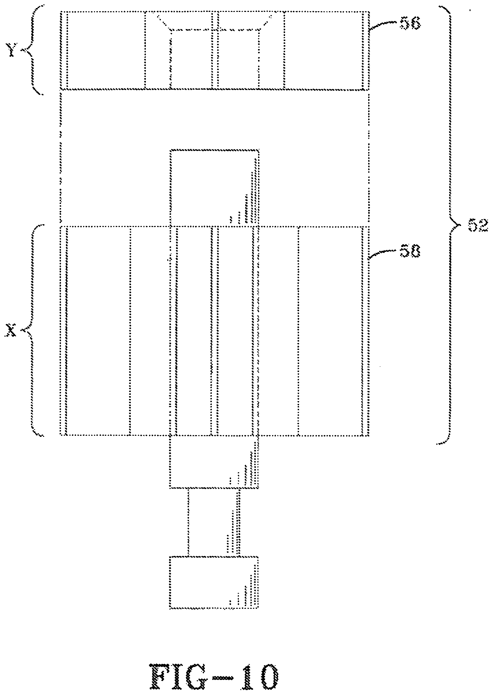

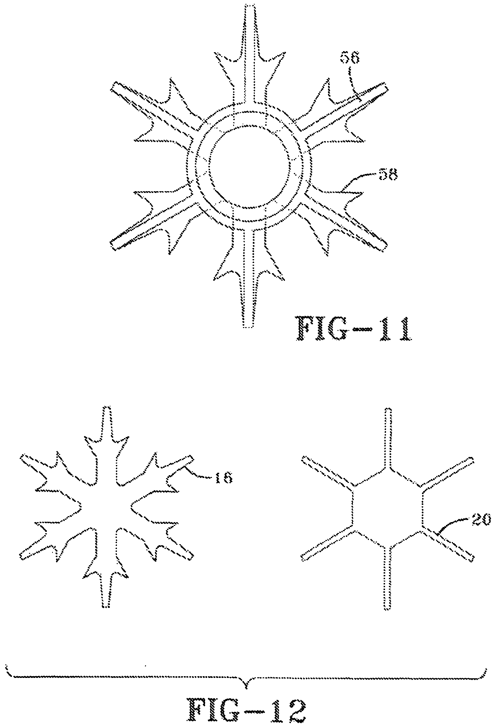

A second embodiment of a molding blade 52 is shown in FIGS. 10-12. The blade 52 has an outer portion 56 having a first shape, which in this case is shaped like a sun indicia 20. The blade 52 has an inner portion 58 formed of a second shape, which in this case is a snowflake indicia 16. Thus when molded in a tire, the consumer will first see a snowflake hole 16 shaped as in FIG. 12 for a depth X which corresponds to the blade 58 depth, and will then see a second symbol 56 in the shape of a sun indicia 20 for a depth Y which corresponds to the depth of the blade 56. Preferably, the first and second holes or indicia are aligned.

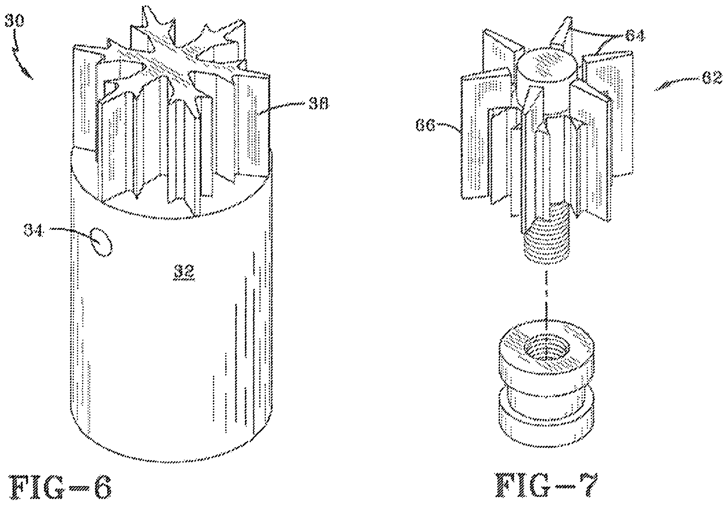

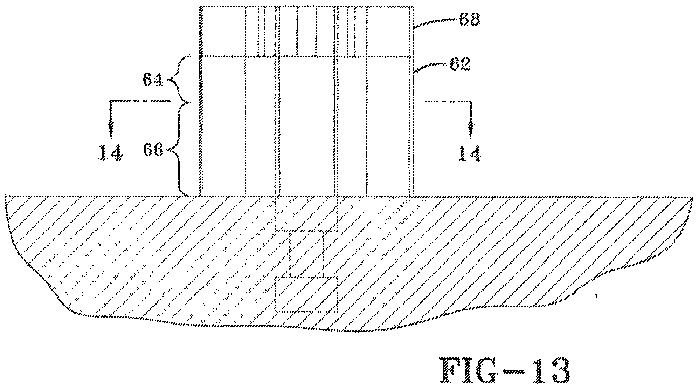

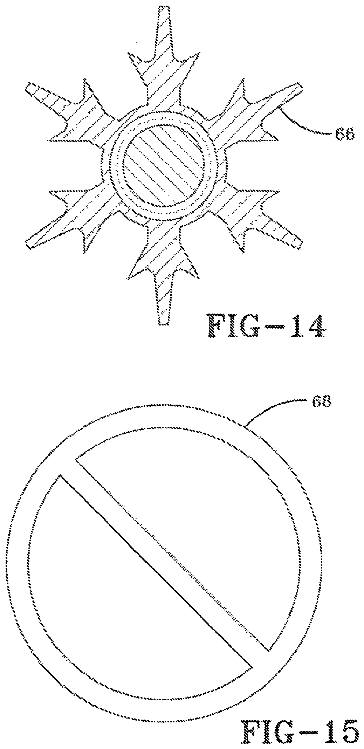

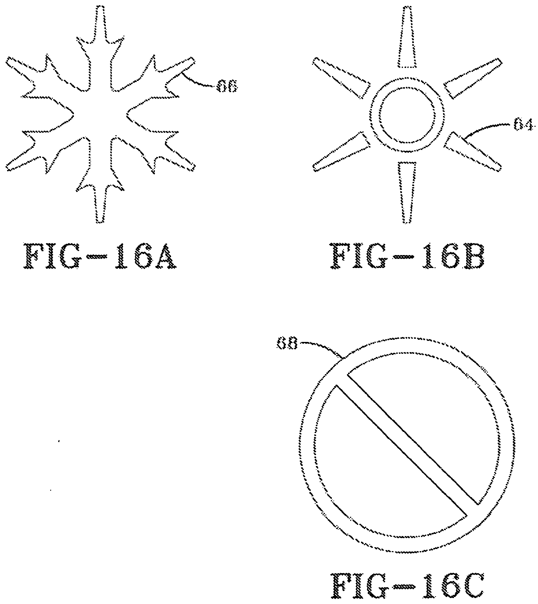

FIG. 7 and FIGS. 13-16 illustrate a third embodiment of the invention. The blade 62 has an outer portion having a first shape in a sun indicia 64, and an inner portion having a second shape of a snowflake indicia 66. An optional third portion 68 has a third symbol, and in this case is a forbidden symbol (circle with a slash). As shown in FIG. 16A-C, the consumer will first see a snowflake indicia 66 (FIG. 16A) on the outer surface of the tread for a specified depth, then a first sun indicia 64 for a second specified depth (FIG. 16B), and then finally a warning indicia 68 (FIG. 16C). The warning indicia hole will remain on the face of the tire tread from a first warning depth (e.g., 1.8 mm) until the nonskid depth.

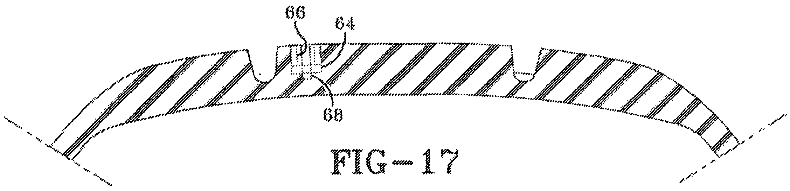

FIG. 17 illustrates a cross-sectional view of a tread shown with a snowflake shaped tread wear indicator 66. The snowflake indicator is visible on a new tread and has a depth of 4 mm. After the tread has been worn to a depth of 4 mm, the sun tread wear indicator 64 will be displayed until a tread depth of 1.6 mm. A warning indicia will then be displayed from 1.6 mm until groove depth is reached.

## Claims

1. A tire tread having at least one tread element (10) or block projecting from a base or non-skid surface of the tread and having a defined tread depth, the at least one tread element (10) or block comprising a first hole or cutout (16) as a wear indicator, the first hole or cutout (16) having a first outer cross-sectional shape that is constant for a first depth which is less than the treat depth or the non-skid depth, wherein the first cross-sectional shape is a snowflake symbol, and wherein:
(i) the first hole or cutout has a second cross-sectional shape that is constant for a second depth and which is a sun symbol, and in that the first hole or cutout has a third cross-sectional shape that is constant for a third depth and which is a warning symbol or a forbidden symbol; or
(ii) the tread element (10) or block is located at a first location of the tread and the tread comprises a further tread element or block which is located at a second location of the tread, the further tread element or block projecting from the base or the non-skid surface of the tread, the further tread element or block comprising a second hole or cutout (20) as a wear indicator, the second hole or cutout (20) having an outer cross-sectional shape that is constant for a depth which is less than the treat depth or the non-skid depth and that is different from the first outer cross-sectional shape, wherein the outer cross-sectional shape of the second hole or cutout (20) is a sun symbol, and wherein the depth of the second hole or cutout (20) is larger than the first depth.

2. The tread of claim 1 wherein the tread has the features of option (i) and wherein the first depth is in a range of from 40% to 50% of the non-skid depth and/or is in a range of from 2.8 to 4.2 mm.

3. The tread of claim 2 wherein the second depth is in a range of from 25% to 40% of the non-skid depth and/or is in a range of from 2 to 2.8 mm.

4. The tread of at least one of the previous claims wherein the tread has the features of option (i) and wherein the third depth is in a range of from 30% to 10% of the non-skid depth and/or is in a range of from 1 to 2 mm, preferably 1.6 mm

5. The tread of claim 1 wherein the tread has the features of option (ii) and wherein the depth of the second hole or cutout (20) is 1.5 to 3 mm larger than the first depth.

6. The tread of claim 5 wherein the first depth is in a range of from 40% to 50% of the non-skid depth and/or is in a range of from 2.8 to 4 mm, and wherein the depth of the second hole or cutout (20) is in a range of from 70% to 80% of the non-skid depth and/or in a range of from 5 mm to 6.4 mm.

7. A pneumatic tire comprising a tread in accordance with at least one of the previous claims.

8. A molding device for forming a tread wear indicator in a tread, the molding device (30) comprising a mold blade (38, 52, 62), the mold blade (38, 52, 62) having a first solid portion having a defined depth, wherein the first solid portion has a cross-sectional shape that is constant for the defined depth and has the shape of a snowflake symbol, wherein the mold blade (38, 52, 62) has a second solid portion having a second defined depth, wherein the second portion has a constant cross-sectional shape for a second defined depth, wherein the second solid portion has a cross-sectional shape of a sun symbol, and wherein the mold blade (38, 52, 62) comprises a third solid portion having a constant cross-sectional shape for a third defined depth and having a cross-sectional shape of a warning symbol or a forbidden symbol.

## Patentansprüche

1. Reifenlauffläche mit mindestens einem Profilelement (10) oder Block, das bzw. der von einem Grund oder Laufstreifenoberfläche der Lauffläche vorragt und eine definierte Laufflächentiefe aufweist, wobei das mindestens eine Profilelement (10) oder der Block ein erstes Loch oder ersten Ausschnitt (16) als Abnutzungsindikator aufweist, wobei das erste Loch oder der erste Ausschnitt (16) eine erste äußere Querschnittsform aufweist, die für eine erste Tiefe konstant ist, welche weniger als die Laufflächentiefe oder die Profiltiefe beträgt, wobei die erste Querschnittsform ein Schneeflockensymbol ist, und wobei:
(i) das erste Loch oder Ausschnitt eine zweite Querschnittsform aufweist, die für eine zweite Tiefe konstant ist und die ein Schneeflockensymbol ist, und wobei das erste Loch oder Ausschnitt eine dritte Querschnittsform aufweist, die für eine dritte Tiefe konstant ist und die ein Warnsymbol oder ein Verbotssymbol ist; oder
(ii) das Profilelement (10) oder der Block sich an einer ersten Stelle der Lauffläche befindet, und die Lauffläche ein weiteres Profilelement oder einen weiteren Block umfasst, das bzw. der sich an einer zweiten Stelle der Lauffläche befindet, wobei das weitere Profilelement oder der weitere Block vom Grund oder der Profiltiefenoberfläche der Lauffläche vorragt, wobei das weitere Profilelement oder der weitere Block ein zweites Loch oder einen zweiten Ausschnitt (20) als Abnutzungsindikator umfasst, wobei das zweite Loch oder der zweite Ausschnitt (20) eine äußere Querschnittsform aufweist, die für eine Tiefe konstant ist, welche weniger als die Laufflächentiefe oder die Profiltiefe beträgt, und die von der ersten äußeren Querschnittsform verschieden ist, wobei die äußere Querschnittsform des zweiten Lochs oder Ausschnitts (20) ein Sonnensymbol ist, und wobei die Tiefe des zweiten Lochs oder Ausschnitts (20) größer als die erste Tiefe ist.

2. Die Lauffläche nach Anspruch 1, wobei die Lauffläche die Merkmale der Option (i) hat und wobei die erste Tiefe in einem Bereich von 40% bis 50% der Profiltiefe liegt und/oder in einem Bereich von 2,8 bis 4,2 mm liegt.

3. Die Reifenlauffläche nach Anspruch 2, wobei die zweite Tiefe in einem Bereich von 25% bis 40% der Profiltiefe liegt und/oder in einem Bereich von 2 bis 2,8 mm liegt.

4. Die Lauffläche nach mindestens einem der vorgenannten Ansprüche, wobei die Lauffläche die Merkmale der Option (i) hat und wobei die dritte Tiefe in einem Bereich von 30% bis 10% der Profiltiefe liegt und/oder in einem Bereich von 1 bis 2 mm, bevorzugt 1,6 mm, liegt.

5. Die Lauffläche nach Anspruch 1, wobei die Lauffläche die Merkmale der Option (ii) hat und wobei die Tiefe des zweiten Lochs oder Ausschnitts (20) 1,5 bis 3 mm größer, als die erste Tiefe ist.

6. Die Lauffläche nach Anspruch 5, wobei die erste Tiefe in einem Bereich von 40% bis 50% der Profiltiefe liegt und/oder in einem Bereich von 2,8 bis 4 mm liegt, und wobei die Tiefe des zweiten Lochs oder Ausschnitts (20) in einem Bereich von 70% bis 80% der Profiltiefe und/oder in einem Bereich von 5 mm bis 6,4 mm liegt.

7. Die Luftreifen, umfassend eine Lauffläche gemäß mindestens einem der vorgenannten Ansprüche.

8. Formvorrichtung zum Formen eines Laufflächenabnutzungsindikators in einer Lauffläche, wobei die Formvorrichtung (30) eine Formklinge (38, 52, 62) umfasst, wobei die Formklinge (38, 52, 62) einen ersten massiven Teil mit einer definierten Tiefe aufweist, wobei der erste massive Teil eine Querschnittsform aufweist, die für die definierte Tiefe konstant ist und die Form eines Schneeflockensymbols aufweist, wobei die Formklinge (38, 52, 62) einen zweiten massiven Teil mit einer zweiten definierten Tiefe aufweist, wobei der zweite Teil eine konstante Querschnittsform für eine zweite definierte Tiefe aufweist, wobei der zweite massive Teil eine Querschnittsform eines Sonnensymbols aufweist, und wobei die Formklinge (38, 52, 62) einen dritten massiven Teil umfasst, der eine konstante Querschnittsform für eine dritte definierte Tiefe aufweist und eine Querschnittsform eines Warnsymbols oder eines Verbotssymbols aufweist.

## Revendications

1. Bande de roulement de bandage pneumatique possédant au moins un élément de bande de roulement (10) ou un bloc faisant saillie par rapport à une base ou par rapport à la surface d'usure de la bande de roulement et possédant une profondeur de bande de roulement définie, ledit au moins un élément de bande de roulement (10) ou ledit au moins un bloc comprenant un premier trou ou une première découpe (16) à titre d'indicateur d'usure, le premier trou ou la première découpe (16) possédant une première configuration externe en coupe transversale qui est constante sur une première profondeur qui est inférieure à la profondeur de bande de roulement ou à la profondeur d'usure, dans laquelle la première configuration en section transversale prend la forme d'un flocon de neige, et dans laquelle :
(i) le premier trou ou la première découpe possède une deuxième configuration en coupe transversale qui est constante sur une deuxième profondeur et qui représente un symbole de soleil, et dans laquelle le premier trou ou la première découpe possède une troisième configuration en coupe transversale qui est constante sur une troisième profondeur et qui représente un symbole d'avertissement ou un symbole d'interdiction ; ou
(ii) la bande de roulement (10) ou le bloc se situe à un premier endroit de la bande de roulement, et dans laquelle la bande de roulement comprend un élément de bande de roulement ou un bloc supplémentaire qui est situé à un deuxième endroit de la bande de roulement, l'élément de bande de roulement ou le bloc supplémentaire faisant saillie par rapport à la base ou par rapport à la surface d'usure de la bande de roulement, l'élément de bande de roulement ou le bloc supplémentaire comprenant un deuxième trou ou une deuxième découpe (20) à titre d'indicateur d'usure, le deuxième trou ou la deuxième découpe (20) possédant une configuration externe en coupe transversale qui est constante sur une profondeur qui est inférieure à la profondeur de bande de roulement ou à la profondeur d'usure et qui est différente de la première configuration externe en coupe transversale, dans laquelle la configuration externe en coupe transversale du deuxième trou ou découpe (20) représente un symbole en forme de soleil, et dans laquelle la profondeur du deuxième trou ou découpe (20) est supérieure à la première profondeur.

2. Bande de roulement selon la revendication 1, dans laquelle la bande de roulement possède les caractéristiques de l'option (i) et dans laquelle la première profondeur se situe dans la plage de 40 % à 50 % de la profondeur d'usure et/ou se situe dans la plage de 2,8 à 4,2 mm.

3. Bande de roulement selon la revendication 2, dans laquelle la deuxième profondeur se situe dans la plage de 25 % à 40 % de la profondeur d'usure et/ou se situe dans la plage de 2 à 2,8 mm.

4. Bande de roulement selon au moins une des revendications précédentes, dans laquelle la bande de roulement possède les caractéristiques de l'option (i) et dans laquelle la troisième profondeur se situe dans la plage de 30 % à 10 % de la profondeur d'usure et/ou se situe dans la plage de 1 à 2 mm, de préférence s'élève à 1,6 mm.

5. Bande de roulement selon la revendication 1, dans laquelle la bande de roulement possède les caractéristiques de l'option (ii) et dans laquelle la profondeur du deuxième trou ou découpe (20) est de 1.5 à 3 mm supérieure à la première profondeur.

6. Bande de roulement selon la revendication 5 dans laquelle la première profondeur se situe dans la plage qui représente de 40 % à 50 % de la profondeur d'usure et/ou dans la plage de 2,8 à 4 mm, et dans laquelle la profondeur du deuxième trou ou découpe (20) se situe dans la plage qui représente de 70 % à 80 % de la profondeur d'usure et/ou dans la plage de 5 à 6,4 mm.

7. Un bandage pneumatique comprenant une bande de roulement selon au moins une des revendications précédentes.

8. Dispositif de moulage pour former un indicateur d'usure de bande de roulement dans une bande de roulement, le dispositif de moulage (30), comprenant une lame de moule (38, 52, 62), la lame de moule (38, 52, 62) possédant une première portion pleine d'une profondeur définie, la première portion pleine possédant une configuration en coupe transversale qui est constante sur la profondeur définie et possédant la configuration d'un symbole représentant un flocon de neige, dans lequel la lame de moule (38, 52, 62) possède une deuxième portion pleine d'une deuxième profondeur définie, la deuxième portion pleine possédant une configuration en coupe transversale qui est constante sur la deuxième profondeur définie et la deuxième portion pleine possédant une configuration en coupe transversale d'un symbole représentant un soleil, et dans lequel la lame de moule (38, 52, 62) comprend la lame de moule (38, 52, 62) possédant une troisième portion pleine possédant une configuration en coupe transversale qui est constante sur une troisième profondeur définie et possédant une configuration en coupe transversale d'un symbole d'avertissement ou d'un symbole d'interdiction.
